# EUROPEAN PATENT APPLICATION

(11) **EP 4 651 545 A1**
(43) Date of publication of application: **19.11.2025**
(21) Application number: 24795608.9
(22) Date of filing: 07.03.2024
(51) Int. Cl.: H04W 24/02

(54) **NETWORK OPTIMIZATION METHOD, APPARATUS, AND STORAGE MEDIUM**

(30) Priority: 28.04.2023 CN 202310489987
(71) Applicant: ZTE Corporation, Shenzhen, Guangdong 518057 (CN)
(72) Inventor: ZHANG, Hong, Shenzhen, Guangdong 518057 (CN); ZHANG, Haitao, Shenzhen, Guangdong 518057 (CN); XIE, Zhongshi, Shenzhen, Guangdong 518057 (CN); WANG, Qiang, Shenzhen, Guangdong 518057 (CN)
(74) Representative: Ziebig Hengelhaupt Intellectual Property Attorneys Patentanwaltskanzlei PartGmbB
(86) International application number: PCT/CN2024/080510
(87) International publication number: WO 2024/222221

(57) **Abstract**

Provided are a network optimization method, an apparatus, and a storage medium. The network optimization method comprises: when a target cell is in a congestion state, acquiring the quality of service level of a first user in a user list of the target cell; determining whether the quality of service level of the first user in the user list of the target cell is less than or equal to a preset level threshold; and if the quality of service level of the first user is less than or equal to the preset level threshold, lowering the quality of service level of the first user.

## Description

The present disclosure claims a priority to Chinese Patent Application No. 202310489987.7, filed on April 28, 2023, which is hereby incorporated by reference in its entirety.

### TECHNICAL FIELD

The present disclosure relates to the technical field of communications, and in particular, to a network optimization method, an apparatus, and a storage medium.

### BACKGROUND

In recent years, with the rapid development of mobile communications, a scale of network has continued to expand, and a number of users has growly exponentially, and network congestion caused by insufficient network resources has consequently become a problem that needs to be solved urgently.

### SUMMARY

In a first aspect, there is provided a network optimization method in embodiments of the present disclosure. The network optimization method includes:
in response to that a target cell is in a congested state, acquiring a quality of service class of a first user in a user list of the target cell;
judging whether the quality of service class of the first user in the user list of the target cell is lower than or equal to a preset class threshold; and
in response to that the quality of service class of the first user is lower than or equal to the preset class threshold, lowering the quality of service class of the first user.

In a second aspect, there is provided a communication apparatus in the embodiments of the present disclosure. The communication apparatus includes:
an acquisition unit, configured to acquire, in response to that a target cell is in a congested state, a quality of service class of a first user in a user list of the target cell;
a processing unit, configured to judge whether the quality of service class of the first user in the user list of the target cell is lower than or equal to a preset class threshold; and in response to that the quality of service class of the first user is lower than or equal to the preset class threshold, lower the quality of service class of the first user.

In a third aspect, there is provided a communication apparatus in the embodiments of the present disclosure. The communication apparatus includes: a processor and a memory; where the memory stores instructions executable for the processor; the processor is configured to, upon executing the instructions, enable the communication apparatus to implement the network optimization method according to the first aspect.

In a fourth aspect, there is provided a computer-readable storage medium in the embodiments of the present disclosure. The computer-readable storage medium stores computer instructions that, upon being run on a computer, enable the computer to perform the network optimization method according to the first aspect.

In a fifth aspect, there is provided a computer program product including computer instructions in the embodiments of the present disclosure. In response to that the computer instructions are run on a computer, the computer is enabled to perform the network optimization method according to the first aspect.

### BRIEF DESCRIPTION OF THE DRAWINGS

Accompanying drawings are used to provide a further understanding of technical solutions of the present disclosure, and are constituted as a part of the specification, which are used to explain the technical solutions of the present disclosure together with the embodiments of the present disclosure, and do not constitute a limitation on the technical solutions of the present disclosure.
FIG. 1 is a schematic diagram of an architecture of a communication system according to some embodiments.
FIG. 2 is a schematic flowchart of a network optimization method according to some embodiments.
FIG. 3 is a schematic flowchart of another network optimization method according to some embodiments.
FIG. 4 is a schematic diagram of an architecture of a 4G communication system according to some embodiments.
FIG. 5 is a schematic diagram of an architecture of a 5G communication system according to some embodiments.
FIG. 6 is a schematic flowchart of yet another network optimization method according to some embodiments.
FIG. 7 is a schematic diagram of an architecture of another 4G communication system according to some embodiments.
FIG. 8 is a schematic diagram of an architecture of another 5G communication system according to some embodiments.
FIG. 9 is a schematic flowchart of yet another network optimization method according to some embodiments.
FIG. 10 is a schematic flowchart of yet another network optimization method according to some embodiments.
FIG. 11 is a schematic diagram of a composition of a communication apparatus according to some embodiments.
FIG. 12 is a structural schematic diagram of a communication apparatus according to some embodiments.

### DETAILED DESCRIPTION

The technical solutions in embodiments of the present disclosure will be described clearly and completely with combination of the accompanying drawings in the embodiments of the present disclosure below. Obviously, the described embodiments are merely a portion of the embodiments of the present disclosure, but not all of the embodiments of the present disclosure. All other embodiments obtained based on the embodiments of the present disclosure by an ordinary person of those skilled in the art without paying any creative effort shall be included in the protection scope of the present disclosure.

Expressions such as "first" and "second" are used for descriptive purposes only, and are not to be understood as indicating or implying a relative importance or implicitly indicating a number of indicated technical features. Thus, features limited with the expressions such as "first" or "second" may explicitly or implicitly include one or more of the features. In the description of the present disclosure, wordings "multiple", "a plurality of" or "the plurality of" mean a number of two or more than two.

In the present disclosure, wordings, such as "exemplarily" or "for example" and variations thereof are used to indicate examples, instances, or illustrations. Any embodiment or design solution described in the embodiments of the present disclosure with wordings such as "exemplarily" or "for example" should not be illustrated as being more preferred or advantageous over other embodiments or design solutions. Specifically, the usage of the wordings such as "exemplarily" or "for example" is intended to present relevant concepts in a concrete way.

In the fourth generation mobile communication technology (4G) network and the fifth generation mobile communication technology (5G) network, a main reason of network congestion is wireless network congestion. It is common for users residing in the wireless cell to experience data service congestion due to a larger number of users and high data volume. Data service congestion, which prevents users from performing data services normally, has a significant impact on user experience.

In 4G and 5G networks, when a user initiates a data service, a bearer is usually established through a static subscribed quality of service (QoS) information in a subscription profile repository (SPR). In a case where wireless network resources are insufficient, user resource allocation cannot be dynamically adjusted, thereby resulting in network congestion and affecting user experience.

Based on this, the embodiments of the present disclosure provide a network optimization method. In response to that a cell is in a congested state, a quality of service class of each user in a user list of the cell is acquired, and whether the quality of service class of each user is lower than or equal to a preset class threshold is judged. In a case where a quality of service class of a user is lower than or equal to the preset class threshold, it means that the quality of service class of the user is low, and the quality of service class of the user is lowered to suppress a maximum data rate and a guaranteed rate for the user, so that network resources for the user may be preempted, thereby reducing a network resource occupancy of the user. By lowering the quality of service class of each user in the cell whose quality of service class is lower than or equal to the preset class threshold, network resources occupied by each user in the cell whose quality of service class is lower than or equal to the preset class threshold are released, thereby effectively alleviating the network congestion of the cell, so that the network resources may meet data service resource requirements of users in the cell whose quality of service class is higher than the preset class threshold.

The embodiments of the present disclosure will be described below in detail with reference to the accompanying drawings.

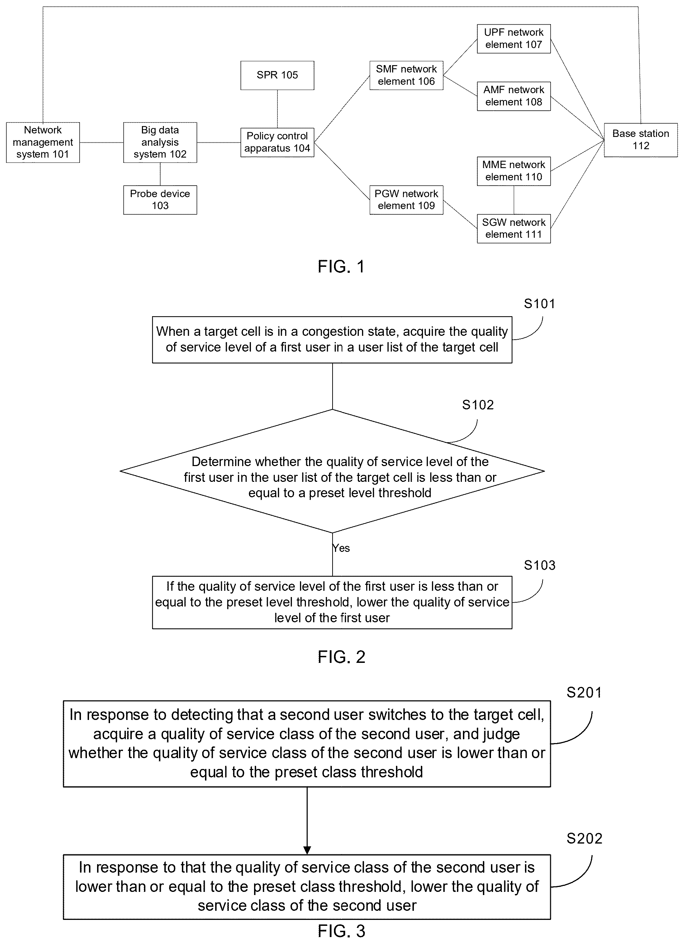

FIG. 1 is a schematic diagram of an architecture of a communication system according to some embodiments. As shown in FIG. 1, the communication system includes a network management system 101, a big data analysis system 102, a probe device 103, a policy control apparatus 104, a subscription profile repository (SPR) 105, a session management function (SMF) network element 106, a user plane function (UPF) network element 107, an access and mobility management function (AMF) network element 108, a packet data network (PDN) gateway (PGW) network element 109, a mobility management entity function (MME) network element 110, a serving gateway (SGW) network element 111, and a base station 112.

The network management system 101 is connected to the big data analysis system 102 and the base station 112. The network management system 101 is configured to harvest resource load data of the base station 112, and send the resource load data of the base station 112 to the big data analysis system 102.

In some embodiments, the big data analysis system 102 is connected to the probe device 103 and the policy control apparatus 104, respectively. The big data analysis system 102 is configured to acquire and analyze the resource load data sent from the network management system 101 and a control plane signaling sent from the probe device 103, and output a list of cells in the congested state and a user list of the cells in the congested state.

In some embodiments, the probe device 103 is configured to harvest and analyze core network control plane data and output the control plane signaling. For example, the probe device 103 harvests and analyzes the core network control plane data based on deep packet inspection (DPI), and outputs a call data record (CDR) to the big data analysis system 102.

In some embodiments, the policy control apparatus 104 is connected to the SPR 105, and the policy control apparatus 104 is connected to the SMF network element 106 or the PGW network element 109. The policy control apparatus 104 may be different network elements in different communication systems. For example, in a case where the communication system is a 4G communication system, the policy control apparatus 104 may be a policy and charging rules function (PCRF) network element 1041, and the PCRF network element 1041 is connected to the SPR 105 and the PGW network element 109. In a case where the communication system is a 5G communication system, the policy control apparatus 104 may be a policy control function (PCF) network element 1042, and the PCF network element 1042 is connected to the SPR 105 and the SMF network element 106.

In some embodiments, the SPR 105 is configured to provide the policy control apparatus 104 with QoS subscription information of a user stored in the SPR 105 itself.

In some embodiments, the SMF network element 106 is connected to the UPF network element 107 and the AMF network element 108, respectively. The SMF network element 106 is configured to perform a bearer update process initiated by a PCF network element according to the 5G standard signaling process, and initiate a bearer establishment process to the PCF network element for a new data service request initiated by a 5G user.

In some embodiments, the UPF network element 107 is connected to the base station 112, which is configured to provide a data forwarding service.

In some embodiments, the AMF network element 108 is connected to the base station 112, which is configured to manage a registration, connection, access verification authorization, mobility and reachability management for a terminal device.

In some embodiments, the PGW network element 109 is connected to the SGW network element 111, which is configured to bear functions such as bearer control, charging, address allocation and non-3GPP access, etc.

As an example, the PGW network element 109 may be replaced by a policy and charging enforcement function (PCEF) network element 1091 located in the PGW network element 109. The PCEF network element 1091 is configured to perform the bearer update process initiated by the PCRF network element 1041 according to the 4G standard signaling process, and initiate a bearer establishment process to the PCRF network element 1041 for a new data service request initiated by a 4G user.

In some embodiments, the MME network element 110 is connected to the base station 112 and the SGW network element 111, respectively, which is configured to perform access control, mobility management, session management, routing selection, etc.

In some embodiments, the SGW network element 111 is connected to the base station 112, which is configured to serve as a local anchor point and assist in completing a reordering function of the base station 112 upon switching between base stations 112; to serve as a mobility anchor point upon switching between different access systems of the 3rd generation partnership project (3GPP); or to lawfully monitoring, and routing and forwarding of data packets.

As an example, the SGW network element 111 may be replaced by a bearer binding and event report function (BBERF) network element located in the SGW network element. The BBERF network element is a policy enforcement point for bearer binding, uplink bearer binding verification, and performing event reporting to the PCRF network element 1041 (if present).

In some embodiments, the base station 112 is configured to provide wireless network coverage to at least one cell, to implement wireless signal transmission between a wired communication network and a wireless communication network.

In some embodiments, in a case where the communication system is a 4G communication system, the base station 112 may be an evolution nodeB (eNB) 1121. In a case where the communication system is a 5G communication system, the base station 112 may be a next generation base station (generation node B, gNB) 1122. According to a size of a service coverage area provided, the base station 112 may be classified into a macro base station for providing a macro cell, a pico base station for providing a pico cell, and a femto base station for providing a femto cell. In some embodiments, a base station may also be referred to as a wireless base station. With the continuous evolution of wireless communication technologies, a future base station may also adopts other names.

In some embodiments, the communication system may further include a mobile station (MS), and the MS is connected to the base station 112. The MS may be a user equipment, and the user equipment may be a vehicle-mounted user equipment, a portable user equipment, or a handheld user equipment. The MS and a mobile user may be completely independent, that is, all information related to the user is stored in a user's smart card (i.e., a SIM card), and the smart card may be used on any mobile station. The user equipment may be a device with wireless transceiving functions (such as a mobile phone, a tablet, a wearable device, a vehicle-mounted device, an augmented reality (AR)/virtual reality (VR) device, a laptop, an ultra mobile personal computer (UMPC), a net-book, a personal digital assistant (PDA), etc.). The embodiments of the present disclosure do not limit a type of the user equipment.

It should be understood that, FIG. 1 is an exemplary structural diagram, and a number of network elements included in the communication system shown in FIG. 1 is not limited (for example, a number of base stations is not limited). Furthermore, in addition to the network elements shown in FIG. 1, the communication system shown in FIG. 1 may further include other network elements, which is not limited thereto.

Next, as shown in FIG. 2, the embodiments of the present disclosure provide a network optimization method, and the method is applied to a policy control apparatus. The policy control apparatus may be the policy control 104 shown in FIG. 1. The method includes the following S101-S103.

In S101, in response to that a target cell is in a congested state, a quality of service class of a first user in a user list of the target cell is acquired.

The target cell is a cell of at least one cell within a network coverage range of a base station. The target cell being in the congested state meets at least one of: an average utilization rate of an uplink physical resource block (PRB) of the target cell being greater than a preset utilization rate; or an average utilization rate of a downlink PRB of the target cell being greater than the preset utilization rate. The preset utilization rate is preset by a network administrator, for example, the preset utilization rate is 70%. That is, in a case where the average utilization rate of the uplink PRB of the target cell is greater than 70%, and/or the average utilization rate of the downlink PRB of the target cell is greater than 70%, it is determined that the target cell is in the congested state. The user list of the target cell includes users that generate services with the target cell.

In some embodiments, a network management system acquires resource load data of the target cell from the base station periodically or in real time, and sends the resource load data of the target cell to a big data analysis system. A probe device harvests a control plane signaling of a data service, generates a CDR signaling, and sends the CDR signaling to the big data analysis system. The resource load data of the target cell includes the average utilization rate of the uplink PRB and the average utilization rate of the downlink PRB of the target cell.

The big data analysis system judges whether the target cell is in the congested state based on the preset utilization rate and the average utilization rate of the uplink PRB and the average utilization rate of the downlink PRB of the target cell included in the resource load data of the target cell. In a case where it is determined that the target cell is in the congested state, the user list of the target cell is extracted based on the CDR signaling sent from the probe device, and then the user list of the target cell is sent to the policy control apparatus.

After the policy control apparatus receives the user list of the target cell sent from the big data analysis system, the policy control apparatus determines that the target cell is in the congested state, and then acquires the quality of service class of the first user in the user list of the target cell from the SPR. The user list of the target cell may include at least one user, and the first user is one of the at least one user.

In S102, whether the quality of service class of the first user in the user list of the target cell is lower than or equal to a preset class threshold is judged.

In some embodiments, the target cell is in the congested state, and in order to alleviate the network congestion of the target cell, after the quality of service class of the first user is acquired, whether the quality of service class of the first user is lower than or equal to the preset class threshold is judged. The preset class threshold is preset by the network administrator.

In S103, in response to that the quality of service class of the first user is lower than or equal to the preset class threshold, the quality of service class of the first user is lowered.

Exemplarily, it is assumed that the quality of service class includes six classes (class 1 to class 6). Taking class 1 being the lowest, class 6 being the highest, and the preset class threshold being 4 as an example, if the quality of service class of the first user is 3, it is determined that the quality of service class of the first user is lower than the preset class threshold.

It can be understood that, the quality of service class of the first user is assigned to the first user by an operator when the first user signs a subscription to join the network. The quality of service class of the first user is positively correlated with a subscription class of the first user, that is, the higher the quality of service class of the first user is, the higher the subscription class of the first user is. When the quality of service class of the first user is lower than or equal to the preset class threshold, it means that the first user is a low-class subscriber. In a case where the target cell is in the congested state, the quality of service class of a low-class subscriber may be lowered, so that network resources for the low-class subscriber may be preempted, and a maximum data rate and a guaranteed rate for the low-class subscriber may be suppressed, and quality requirements on a priority, a packet loss rate and data latency of the low-class subscriber may be lowered, thereby reducing the network resource occupancy of the low-class subscriber and releasing network resources, thereby alleviating the network congestion of the target cell, so that the network resources may meet data service resource requirements of a user in the target cell whose quality of service class is greater than the preset class threshold (i.e., a high-class subscriber).

Therefore, in a case where the quality of service class of the first user is lower than or equal to the preset class threshold, the quality of service class of the first user is lowered.

As an example, lowering the quality of service class of the first user includes at least one of: lowering a quality of service (QoS) class identifier (QCI) of the first user; lowering an allocation and retention priority (ARP) of the first user.

It should be noted that, in a case where the communication system is a 5G communication system, lowering the quality of service class identifier of the first user includes lowering a 5G quality of service class identifier (i.e., a 5G QoS class indicator (5QI)) of the first user.

In some embodiments, lowering the quality of service class of the first user may be adjusting a current first quality of service class of the first user to a preset second quality of service class of the first user, where the second quality of service class is lower than the first quality of service class.

Exemplarily, it is assumed that the quality of service class includes six classes (class 1 to class 6), class 1 is the lowest and class 6 is the highest. If the current first quality of service class of the first user is 3, an adjusted second quality of service class of the first user may be 2.

As an example, in a case where the communication system is a 4G communication system, the policy control apparatus (i.e., the PCRF network element) lowering the quality of service class of the first user may be that the PCRF network element initiates a bearer update to the PGW network element or the PCEF network element in the PGW network element, and indicates the PGW network element or the PCEF network element in the PGW network element to update the quality of service class of the first user according to a policy setting in the PCRF network element, and assigns a low-class QCI and/or ARP to the first user, so that the network resources for the first user may be preempted, and a maximum data rate and a guaranteed rate for the first user may be suppressed, and quality requirements on a priority, a packet loss rate and data latency of the first user may be lowered, thereby reducing the network resource occupancy of the first user. The bearer update complies with the 3GPP standard specification.

As another example, in a case where the communication system is a 5G communication system, the policy control apparatus (i.e., the PCF network element) lowering the quality of service class of the first user may be that the PCF network element initiates a bearer update to the SMF network element, and indicates the SMF network element to update the quality of service class of the first user according to a policy setting in the PCF network element, and assign a low-class of 5QI and/or ARP to the first user, so that the network resources for the first user may be preempted, and a maximum data rate and a guaranteed rate for the first user may be suppressed, and quality requirements on a priority, a packet loss rate and data latency of the first user may be lowered, thereby reducing the network resource occupancy of the first user. The bearer update complies with the 3GPP standard specification.

In this way, lowering a quality of service class of each user in the user list of the target cell whose quality of service class is lower than or equal to the preset class threshold may release certain network resources, thus contributing to alleviating network congestion in the target cell.

Based on the embodiments shown in FIG. 2, in response to that the target cell is in the congested state, a quality of service class of each user in a user list of the target cell is acquired, and whether the quality of service class of each user is lower than or equal to a preset class threshold is judged. In a case where a quality of service class of a user is lower than or equal to the preset class threshold, it means that the quality of service class of the user is low, that is, a subscription class of the user is low, the quality of service class of the user is lowered to suppress a maximum data rate and a guaranteed rate for the user, so that network resources for the user may be preempted, thereby reducing a network resource occupancy of the user. By lowering the quality of service class of each user in the target cell whose quality of service class is lower than or equal to the preset class threshold, the network resources are released, which effectively alleviates the network congestion of the target cell, so that the network resources may meet the network resource requirements of a user in the target cell whose quality of service class is greater than the preset class threshold.

In some embodiments, in a case where the target cell is in the congested state, as shown in FIG. 3, the method may further include the following S201-S202.

In S201, in response to detecting that a second user switches to the target cell, a quality of service class of the second user is acquired, and whether the quality of service class of the second user is lower than or equal to the preset class threshold is judged.

The second user may be a user in a user list of the target cell.

In some embodiments, in a case where the target cell is in the congested state, the network management system acquires resource load data of the base station from the base station, and sends the acquired resource load data of the base station to the big data analysis system. The big data analysis system detects whether there is a user switching out from the target cell or whether there is user switching to the target cell according to the resource load data of the base station. In a case where the big data analysis system detects that the second user switches to the target cell, the big data analysis system updates the user list of the target cell and sends the updated user list of the target cell to the policy control apparatus. After the policy control apparatus receives the updated user list of the target cell sent from the big data analysis system, the policy control apparatus determines that the second user switches to the target cell. The policy control apparatus acquires the quality of service class of the second user from the SPR, and judges whether the quality of service class of the second user is lower than or equal to the preset class threshold.

An identifier of the second user is used to uniquely identify the second user (for example, the identifier of the second user may be a name of the second user).

In S202, in response to that the quality of service class of the second user is lower than or equal to the preset class threshold, the quality of service class of the second user is lowered.

It can be understood that, when the quality of service class of the second user is lower than or equal to the preset class threshold, it means that the quality of service class of the second user newly switching to the target cell is low, that is, a subscription class of the second user is low. In order to alleviate the network congestion of the target cell, the quality of service class of the second user may be lowered.

Regarding a detailed implementation of lowering the quality of service class of the second user may refer to the description of lowering the quality of service class of the first user in S103 above, which will not be repeated herein.

The embodiments shown in FIG. 2 and the embodiments shown in FIG. 3 are described in detail below with reference to examples.

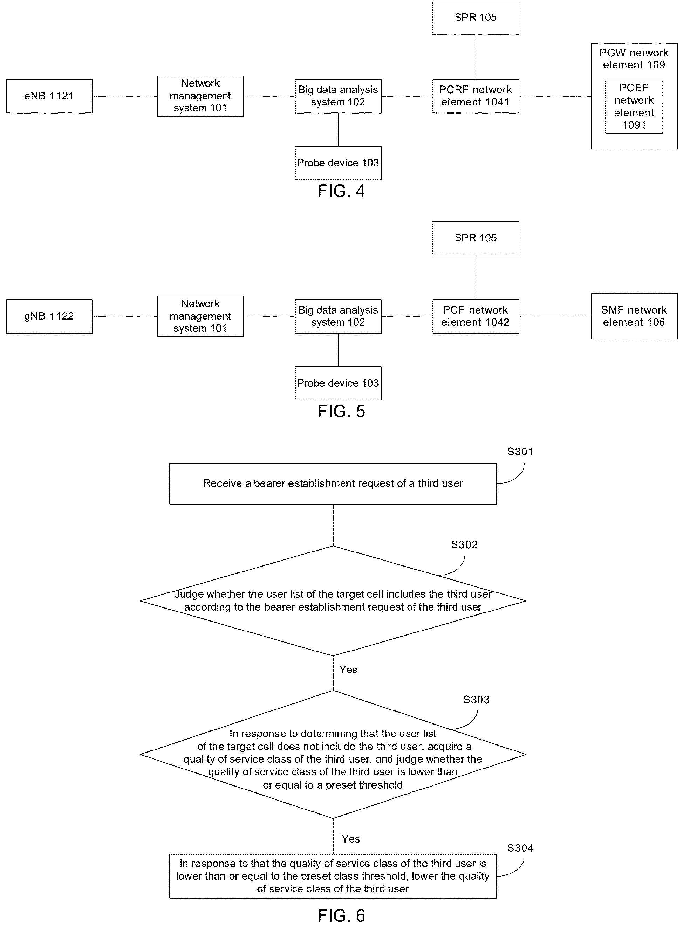

As an example, taking the communication system shown in FIG. 1 being a 4G communication system as an example, FIG. 4 is a schematic diagram of an architecture of a 4G communication system according to some embodiments.

In combination with the 4G communication system shown in FIG. 4, the network management system 101 acquires an average utilization rate of an uplink PRB and an average utilization rate of a downlink PRB of the target cell periodically or in real time from the eNB 1121, and sends the average utilization rate of an uplink PRB and the average utilization rate of a downlink PRB of the target cell to the big data analysis system 102. The probe device 103 harvests a control plane signaling of a data service, generates a CDR signaling, and sends the CDR signaling to the big data analysis system 102.

The big data analysis system 102 judges whether the target cell is in the congested state based on a preset utilization rate, the average utilization rate of the uplink PRB and the average utilization rate of the downlink PRB of the target cell. In a case where it is determined that the target cell is in the congested state, the user list of the target cell is extracted based on the CDR signaling sent from the probe device 103, and then the user list of the target cell is sent to the PCRF network element 1041.

After the PCRF network element 1041 receives the user list of the target cell sent from the big data analysis system 102, the PCRF network element 1041 determines that the target cell is in the congested state, and then acquires the quality of service class of the first user in the user list of the target cell from the SPR 105, and judges whether the quality of service class of the first user is lower than or equal to the preset class threshold. In a case where the quality of service class of the first user is lower than or equal to the preset class threshold, a bearer update is initiated to the PGW network element 109 or the PCEF network element 1091 located in the PGW network element 109, and the quality of service class borne in a data service of the first user is updated according to a policy setting in the PCRF network element 1041, and a low-class QCI and/or ARP is assigned to the first user, so that the network resources for the first user may be preempted, a maximum data rate and a guaranteed rate of the first user are suppressed, and quality requirements on the priority, the packet loss rate and data latency of the first user are reduced, thereby reducing the network resource occupancy of the first user.

In some embodiments, after the big data analysis system 102 detects that the second user switches to the target cell, the big data analysis system 102 updates the user list of the target cell and sends the updated user list to the PCRF network element 1041. After the PCRF network element 1041 receives the updated user list of the target cell sent from the big data analysis system 102, the PCRF network element 1041 determines that the second user switches to the target cell, and the PCRF network element 1041 acquires the subscribed quality of service information of the second user from the SPR 105, that is, acquires the quality of service class of the second user, and then judges whether the quality of service class of the second user is lower than or equal to the preset class threshold, and in a case where the quality of service class of the second user is lower than or equal to the preset class threshold, initiates a bearer update to the PGW network element 109 or the PCEF network element 1091 located in the PGW network element 109, updates the quality of service class borne in a data service of the second user according to a policy setting in the PCRF network element 1041, and assigns the second user a low-class QCI and/or ARP.

As another example, taking the communication system shown in FIG. 1 being a 5G communication system as an example, FIG. 5 is a schematic diagram of an architecture of a 5G communication system according to some embodiments.

In combination with the 5G communication system shown in FIG. 5, the network management system 101 acquires an average utilization rate of an uplink PRB and an average utilization rate of a downlink PRB of the target cell periodically or in real time from the gNB 1122, and sends the average utilization rate of an uplink PRB and the average utilization rate of a downlink PRB of the target cell to the big data analysis system 102. The probe device 103 harvests a control plane signaling of a data service, generates a CDR signaling, and sends the CDR signaling to the big data analysis system 102.

The big data analysis system 102 judges whether the target cell is in the congested state based on a preset utilization rate, the average utilization rate of the uplink PRB and the average utilization rate of the downlink PRB of the target cell. In a case where it is determined that the target cell is in the congested state, the user list of the target cell is extracted based on the CDR signaling sent from the probe device 103, and then the user list of the target cell is sent to the PCF network element 1042.

After the PCF network element 1042 receives the user list of the target cell sent from the big data analysis system 102, the PCF network element 1042 determines that the target cell is in the congested state, and then acquires the quality of service class of the first user in the user list of the target cell from the SPR 105, and judges whether the quality of service class of the first user is lower than or equal to the preset class threshold. In a case where the quality of service class of the first user is lower than or equal to the preset class threshold, a bearer update is initiated to the SMF network element 106, and the quality of service class borne in a data service of the first user is updated according to a policy setting in the PCF network element 1042, and a low-class QCI and/or ARP is assigned to the first user, so that the network resources for the first user may be preempted, a maximum data rate and a guaranteed rate of the first user are suppressed, and quality requirements on the priority, the packet loss rate and data latency of the first user are reduced, thereby reducing the network resource occupancy of the first user.

In some embodiments, after the big data analysis system 102 detects that the second user switches to the target cell, the big data analysis system 102 updates the user list of the target cell and sends the updated user list to the PCF network element 1042. After the PCF network element 1042 receives the updated user list of the target cell sent from the big data analysis system 102, the PCF network element 1042 determines that the second user switches to the target cell, and the PCF network element 1042 acquires the subscribed quality of service information of the second user from SPR 105, that is, acquires the quality of service class of the second user, and then judges whether the quality of service class of the second user is lower than or equal to the preset class threshold, and in a case where the quality of service class of the second user is lower than or equal to the preset class threshold, initiates a bearer update to SMF network element 106, updates the quality of service class borne in a data service of the second user according to a policy setting in PCF network element 1042, and assigns the second user a low-class QCI and/or ARP.

In some embodiments, in a case where the target cell is in the congested state, as shown in FIG. 6, the method further includes the following S301-S304.

In S301, a bearer establishment request of a third user is received.

The third user is a user located within a network coverage range of the target cell.

In some embodiments, in a case where the target cell is in the congested state, the network management system acquires resource load data of the base station from the base station, and sends the acquired resource load data of the base station to the big data analysis system. The big data analysis system detects whether there is a user initiating a bearer establishment request within the network coverage range of the target cell according to the resource load data of the base station. The bearer establishment request includes a user in the user list of the target cell initiating a new data service, or includes a user outside the user list of the target cell registering, attaching to the target cell to initiate a data service, or the like. After the big data analysis system detects that the third user initiates a bearer establishment request, the big data analysis system sends the bearer establishment request of the third user to the policy control apparatus, and then the policy control apparatus receives the bearer establishment request of the third user.

In some embodiments, a user located within the network coverage range of the target cell initiates a new bearer establishment request in accordance with the 3GPP specification.

In S302, whether the user list of the target cell includes the third user is judged according to the bearer establishment request of the third user.

In some embodiments, after the policy control apparatus receives the bearer establishment request of the third user, the policy control apparatus may judge whether the user list of the target cell stored in the policy control apparatus itself includes the third user by using the third user as an index. If the third user is retrieved from the user list of the target cell stored in the policy control apparatus itself, it is determined that the user list of the target cell includes the third user, that is, the third user is an existing user of the target cell. If the third user is not retrieved in the user list of the target cell stored in the policy control apparatus itself, it is determined that the user list of the target cell does not include the third user, that is, the third user is a user newly added to the target cell.

In S303, in response to determining that the user list of the target cell does not include the third user, a quality of service class of the third user is acquired, and whether the quality of service class of the third user is lower than or equal to a preset threshold is judged.

From the above description, it can be seen that in a case where it is determined that the user list of the target cell does not include the third user, it means that the third user is a user newly added to the target cell. Since the target cell is currently in the congested state, in order to alleviate the network congestion of the target cell, the policy control apparatus may acquire the quality of service class of the third user from the SPR, and judge whether the quality of service class of the third user is lower than or equal to the preset class threshold.

In some embodiments, after the policy control apparatus acquires the quality of service class of the third user from the SPR, the third user may be added to the user list of the target cell.

In S304, in response to that the quality of service class of the third user is lower than or equal to the preset class threshold, the quality of service class of the third user is lowered.

It should be understood that, in a case where the quality of service class of the third user is lower than or equal to the preset class threshold, it means that the third user is a low-class subscriber. In order to alleviate the network congestion of the target cell, the quality of service class of the third user may be lowered.

Regarding a detailed implementation of lowering the quality of service class of the third user may refer to the description of lowering the quality of service class of the first user in S103 above, which will not be repeated herein.

Embodiments shown in FIG. 6 will be described in detail below with reference to examples.

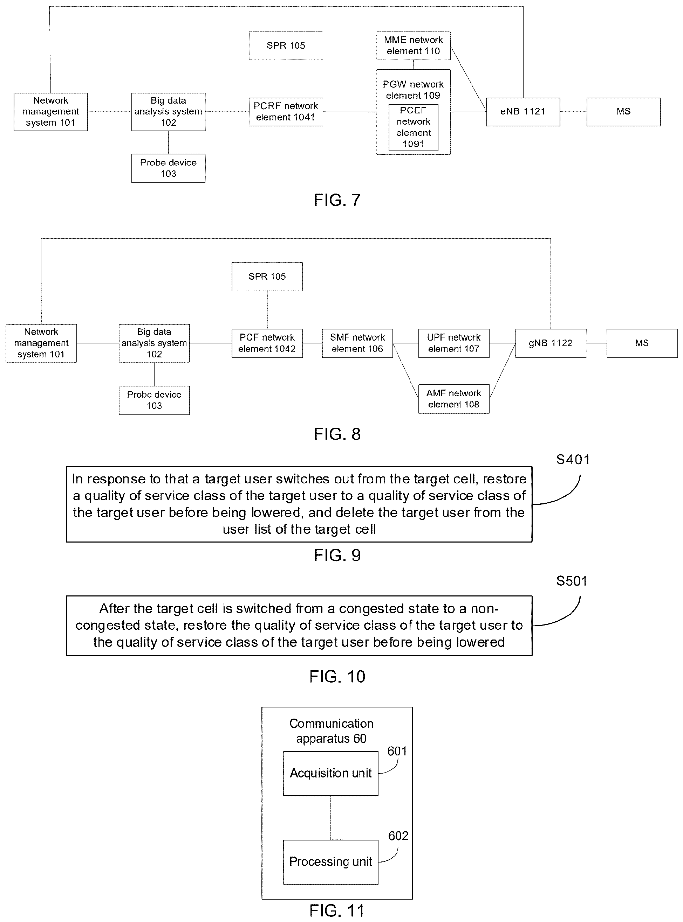

As an example, taking the communication system shown in FIG. 1 being a 4G communication system as an example, FIG. 7 is a schematic diagram of an architecture of another 4G communication system according to some embodiments.

In combination with the 4G communication system shown in FIG. 7, in a case where the target cell is in the congested state, the network management system 101 acquires the resource load data of eNB 1121 from eNB 1121, and sends the acquired resource load data of eNB 1121 to the big data analysis system 102. The big data analysis system 102 detects whether there is a user initiating a bearer establishment request within the network coverage range of the target cell according to the resource load data of the eNB 1121. After the big data analysis system 102 detects that the third user initiates a bearer establishment request, the big data analysis system 102 sends the bearer establishment request of the third user to the PCRF network element 1041, and then the PCRF network element 1041 receives the bearer establishment request of the third user.

After the PCRF network element 1041 receives the bearer establishment request of the third user, the PCRF network element 1041 may judge whether the user list of the target cell stored in the PCRF network element 1041 itself includes the third user by using the third user as an index. If the third user is retrieved from the user list of the target cell stored in the PCRF network element 1041 itself, it is determined that the user list of the target cell includes the third user. If the third user is not retrieved in the user list of the target cell stored in the PCRF network element 1041 itself, it is determined that the user list of the target cell does not include the third user.

In a case where it is determined that the user list of the target cell does not include the third user, the PCRF network element 1041 acquires the quality of service class of the third user from the SPR 105, and judges whether the quality of service class of the third user is lower than or equal to a preset threshold. In a case where the quality of service class of the third user is lower than or equal to the preset class threshold, the PCRF network element 1041 initiates a bearer update to the PGW network element 109 or the PCEF network element 1091 located in the PGW network element 109, and indicates the PGW network element 109 or the PCEF network element 1091 located in the PGW network element 109 to update the quality of service class of borne in a data service of the third user according to a policy setting in the PCRF network element 1041, and assigns a low-class QCI and/or ARP to the third user, so that network resources for the third user may be preempted, a maximum data rate and a guaranteed rate for the third user may be suppressed, and quality requirements on a priority, a packet loss rate and data latency of the third user may be lowered, thereby reducing the network resource occupancy of the third user.

In some embodiments, in a case where it is determined that the user list of the target cell does not include the third user, the PCRF network element 1041 may further notify the SPR 105 to add the third user to the user list of the target cell.

As another example, taking the communication system shown in FIG. 1 being a 5G communication system as an example, FIG. 8 is a schematic diagram of an architecture of another 5G communication system according to some embodiments.

In combination with the 5G communication system shown in FIG. 8, in a case where the target cell is in the congested state, the network management system 101 acquires resource load data of the gNB 1122 from the gNB 1122, and sends the acquired resource load data of the gNB 1122 to the big data analysis system 102. The big data analysis system 102 detects whether there is a user initiating a bearer establishment request within the network coverage range of the target cell according to the resource load data of the gNB 1122. After the big data analysis system 102 detects that the third user initiates a bearer establishment request, the big data analysis system 102 sends the bearer establishment request of the third user to the PCF network element 1042, and then the PCF network element 1042 receives the bearer establishment request of the third user.

After the PCF network element 1042 receives the bearer establishment request of the third user, the PCF network element 1042 may judge whether the user list of the target cell stored in the PCF network element 1042 itself includes the third user by using the third user as an index. If the third user is retrieved from the user list of the target cell stored in the PCF network element 1042 itself, it is determined that the user list of the target cell includes the third user. If the third user is not retrieved in the user list of the target cell stored in the PCF network element 1042 itself, it is determined that the user list of the target cell does not include the third user.

In a case where it is determined that the user list of the target cell does not include the third user, the PCF network element 1042 acquires the quality of service class of the third user from the SPR 105, and judges whether the quality of service class of the third user is lower than or equal to a preset threshold. In a case where the quality of service class of the third user is lower than or equal to the preset class threshold, the PCF network element 1042 initiates a bearer update to the SMF network element 106, and indicates the SMF network element 106 to update the quality of service class borne in a data service of the third user according to a policy setting in the PCF network element 1042, and assigns a low-class QCI and/or ARP to the third user, so that the network resources for the third user may be preempted, a maximum data rate and a guaranteed rate for the third user may be suppressed, and quality requirements a priority, on a packet loss rate and data latency of the third user may be lowered, thereby reducing the network resource occupancy of the third user.

In some embodiments, in a case where the target cell is in the congested state, as shown in FIG. 9, the method further includes the following S401.

In S401, in response to that a target user switches out from the target cell, a quality of service class of the target user is restored to a quality of service class of the target user before being lowered, and the target user is deleted from the user list of the target cell.

In some embodiments, in a case where the target cell is in the congested state, the network management system acquires resource load data of the base station from the base station, and sends the acquired resource load data of the base station to the big data analysis system. The big data analysis system detects whether there is a target user in the target cell switching out from the target cell based on the resource load data of the base station. The target user is a user whose quality of service class is lowered in response to that the target cell is in the congested state.

In a case of detecting that the target user switches out from the target cell, the big data analysis system sends the target user to the policy control apparatus to inform the policy control apparatus that the target user switches out from the target cell. After the policy control apparatus receives the target user, the policy control apparatus determines that the target user switches out from the target cell, restores the quality of service class of the target user to the quality of service class of the target user before being lowered, and deletes the target user from the user list of the target cell.

As an example, in a case where the communication system is a 4G communication system, the policy control apparatus (i.e., the PCRF network element) restoring the quality of service class of the target user to the quality of service class of the target user before being lowered, and deleting the target user from the user list of the target cell may be that the PCRF network element initiates a bearer update to the PGW network element or the PCEF network element in the PGW network element, and indicates the PGW network element or the PCEF network element in the PGW network element to restore the quality of service class of the target user before being lowered according to a policy setting in the PCRF network element, and indicates the SPR to delete the target user from the user list of the target cell.

As another example, in a case where the communication system is a 5G communication system, the policy control apparatus (i.e., the PCF network element) restoring the quality of service class of the target user to the quality of service class of the target user before being lowered, and deleting the target user from the user list of the target cell may be that the PCF network element initiates a bearer update to the SMF network element, indicates the SMF network element to restore the quality of service class of the target user before being lowered according to a policy setting in the PCRF network element, and indicates the SPR to delete the target user from the user list of the target cell.

In some embodiments, as shown in FIG. 10, the method further includes the following S501.

In S501, after the target cell is switched from a congested state to a non-congested state, the quality of service class of the target user is restored to the quality of service class of the target user before being lowered.

It could be understood that, after the target cell is switched from the congested state to the non-congested state, it means that the network congestion of the target cell has been alleviated, and the quality of service class of the target user may be restored to the quality of service class of the target user before being lowered to ensure a network usage experience of the target user.

In some embodiments, in a case where the target cell is in the congested state, the network management system acquires the average utilization rate of the uplink PRB and the average utilization rate of the downlink PRB of the target cell periodically or in real time from the base station, and sends the average utilization rate of the uplink PRB and the average utilization rate of the downlink PRB of the target cell to the big data analysis system. The big data analysis system judges whether the target cell switches from the congested state to the non-congested state based on a preset utilization rate threshold, the average utilization rate of the uplink PRB and the average utilization rate of the downlink PRB of the target cell. In a case where it is detected that both the average utilization rate of the uplink PRB and the average utilization rate of the downlink PRB of the target cell are smaller than the preset utilization rate threshold, it is determined that the target cell is switched from the congested state to the non-congested state.

After determining that the target cell is switched from the congested state to the non-congested state, the big data analysis system notifies the policy control apparatus that the target cell is switched from the congested state to the non-congested state. After the policy control apparatus learns that the target cell is switched from the congested state to the non-congested state, the policy control apparatus restores the quality of service class of the target user to the quality of service class of the target user before being lowered.

For a detailed implementation of how the policy control apparatus restores the quality of service class of the target user to the quality of service class of the target user before being lowered may refer to the description of the policy control apparatus restoring the quality of service class of the target user to the quality of service class of the target user before being lowered in S301 above, which will not be repeated herein.

The embodiments shown in FIG. 9 and the embodiments shown in FIG. 10 are described by taking examples below with reference to examples.

In combination with the 4G communication system shown in FIG. 4 or the 4G communication system shown in FIG. 7, the network management system 101 acquires the resource load data of eNB 1121 from eNB 1121, and sends the acquired resource load data of eNB 1121 to the big data analysis system 102. The big data analysis system 102 detects whether there is a target user in the target cell switching out from the target cell according to the resource load data of the eNB 1121.

In a case of detecting that the target user switches out from the target cell, the big data analysis system 102 sends the target user to the PCRF network element 1041 to inform the PCRF network element 1041 that the target user switches out from the target cell. After the PCRF network element 1041 receives the target user, the PCRF network element 1041 determines that the target user has switched out from the target cell. The PCRF network element 1041 initiates a bearer update to the PGW network element 109 or the PCEF network element 1091 located in the PGW network element 109, and indicates the PGW network element 109 or the PCEF network element 1091 located in the PGW network element 109 to restore the quality of service class of the target user before being lowered according to a policy setting in the PCRF network element 1041, and indicates the SPR 105 to delete the target user from the user list of the target cell.

In some embodiments, in a case where the target cell is in the congested state, the network management system acquires the average utilization rate of the uplink PRB and the average utilization rate of the downlink PRB of the target cell periodically or in real time from the eNB 1121, and sends the average utilization rate of the uplink PRB and the average utilization rate of the downlink PRB of the target cell to the big data analysis system. The big data analysis system 102 judges whether the target cell is switched from the congested state to the non-congested state based on a preset utilization rate threshold, an average utilization rate of the uplink PRB and an average utilization rate of the downlink PRB of the target cell. In a case where it is detected that both the average utilization rate of the uplink PRB and the average utilization rate of the downlink PRB of the target cell are smaller than the preset utilization rate threshold, it is determined that the target cell is switched from the congested state to the non-congested state.

After determining that the target cell is switched from the congested state to the non-congested state, the big data analysis system 102 notifies the PCRF network element 1041 that the target cell is switched from the congested state to the non-congested state. After the PCRF network element 1041 learns that the target cell is switched from the congested state to the non-congested state, the PCRF network element 1041 initiates a bearer update to the PGW network element 109 or the PCEF network element 1091 located in the PGW network element 109, and indicates the PGW network element 109 or the PCEF network element 1091 located in the PGW network element 109 to restore the quality of service class of the target user before being lowered according to the policy setting in the PCRF network element 1041.

In combination with the 5G communication system shown in FIG. 5 or the 5G communication system shown in FIG. 8, the network management system 101 acquires resource load data of the gNB 1122 from the gNB 1122, and sends the acquired resource load data of the gNB 1122 to the big data analysis system 102. The big data analysis system 102 detects whether there is a target user in the target cell switching out from the target cell according to the resource load data of gNB 1122.

In a case of detecting that the target user switches out from the target cell, the big data analysis system 102 sends the target user to the PCF network element 1042 to inform the PCF network element 1042 that the target user switches out from the target cell. After the PCF network element 1042 receives the target user, the PCF network element 1042 determines that the target user switches out from the target cell. The PCF network element 1042 initiates a bearer update to the SMF network element 106, and indicates the SMF network element 106 to restore the quality of service class of the target user before being lowered according to a policy setting in the PCF network element 1042, and indicates the SPR 105 to delete the target user from the user list of the target cell.

In some embodiments, in a case where the target cell is in the congested state, the network management system acquires the average utilization rate of the uplink PRB and the average utilization rate of the downlink PRB of the target cell periodically or in real time from the gNB 1122, and sends the average utilization rate of the uplink PRB and the average utilization rate of the downlink PRB of the target cell to the big data analysis system. The big data analysis system 102 judges whether the target cell is switched from the congested state to the non-congested state based on a preset utilization rate threshold, an average utilization rate of the uplink PRB and an average utilization rate of the downlink PRB of the target cell. In a case where it is detected that both the average utilization rate of the uplink PRB and the average utilization rate of the downlink PRB of the target cell are smaller than the preset utilization rate threshold, it is determined that the target cell is switched from the congested state to the non-congested state.

After determining that the target cell is switched from the congested state to the non-congested state, the big data analysis system 102 notifies the PCF network element 1042 that the target cell is switched from the congested state to the non-congested state. After the PCF network element 1042 learns that the target cell is switched from the congested state to the non-congested state, the PCF network element 1042 initiates a bearer update to SMF network element 106, and indicates the SMF network element 106 to restore the quality of service class of the target user before being lowered according to the policy setting in the PCF network element 1042.

The foregoing mainly introduces the solutions provided by the present disclosure from the perspective of interaction between various nodes. It can be understood that, the various nodes (e.g., the terminal), in order to implement the above-mentioned functions, the various nodes include corresponding hardware structures and/or software modules for performing the various functions. Those skilled in the art should easily realize that the present disclosure may be implemented in the form of hardware or a combination of hardware and computer software in combination with algorithms and steps described in the embodiments disclosed in the present disclosure. Whether a certain function is implemented by hardware or by computer software driving hardware depends on the specific application and design constraint conditions of the technical solutions. Professional technicians may use different methods to implement the described functions for each specific application, but such implementation should not be considered beyond the scope of the present disclosure.

FIG. 11 is a schematic diagram of a composition of a communication apparatus according to some embodiments. As shown in FIG. 11, the communication apparatus 60 includes an acquisition unit 601 and a processing unit 602.

The communication apparatus 60 may be the above-mentioned policy control apparatus or a chip in the policy control apparatus. In response to that the communication apparatus 60 is used to implement the functions of the policy control apparatus in the above-mentioned embodiments, various units are configured to implement the following functions.

The acquisition unit 601 is configured to acquire, in response to that a target cell is in a congested state, a quality of service class of a first user in a user list of the target cell.

The processing unit 602 is configured to judge whether the quality of service class of the first user in the user list of the target cell is lower than or equal to a preset class threshold; and in response to that the quality of service class of the first user is lower than or equal to the preset class threshold, lower the quality of service class of the first user.

In some embodiments, the acquisition unit 601 is further configured to acquire, in response to detecting that a second user switches to the target cell, a quality of service class of the second user, and judge whether the quality of service class of the second user is lower than or equal to the preset class threshold.

The processing unit 602 is further configured to lower the quality of service class of the second user in response to that the quality of service class of the second user is lower than or equal to the preset class threshold.

In some embodiments, the acquisition unit 601 is further configured to receive a bearer establishment request of a third user, where the third user is a user located within a network coverage range of the target cell.

The processing unit 602 is further configured to judge whether the user list of the target cell includes the third user according to the bearer establishment request of the third user.

In response to determining that the user list of the target cell does not include the third user, the acquisition unit 601 is further configured to acquire a quality of service class of the third user, and judge whether the quality of service class of the third user is lower than or equal to the preset class threshold.

The processing unit 602 is further configured to, in response to that the quality of service class of the third user is lower than or equal to the preset class threshold, lower the quality of service class of the third user.

In some embodiments, the processing unit 602 is further configured to, in response to that a target user switches out from the target cell, restore a quality of service class of the target user to a quality of service class of the target user before being lowered, and delete the target user from the user list of the target cell, where the target user is a user whose quality of service class is lowered in response to that the target cell is in the congested state.

In some embodiments, the processing unit 602 is further configured to, after the target cell is switched from the congested state to a non-congested state, restore a quality of service class of a target user to a quality of service class of the target user before being lowered, where the target user is a user whose quality of service class is lowered in response to that the target cell is in the congested state.

In some embodiments, the processing unit 602 is configured to lower a quality of service class identifier of the first user; and lower an allocation and retention priority of the first user.

In some embodiments, the processing unit 602 is configured to adjust a current first quality of service class of the first user to a preset second quality of service class of the first user, where the second quality of service class is lower than the first quality of service class.

In some embodiments, the target cell being in the congested state meets at least one of: an average utilization rate of an uplink physical resource block (PRB) of the target cell being greater than a preset utilization rate; or an average utilization rate of a downlink PRB of the target cell being greater than the preset utilization rate.

It should be noted that the units in FIG. 11 may also be referred to as modules. For example, the acquisition unit may be referred to as an acquisition module. In addition, in the embodiments shown in FIG. 11, names of the various units may not be the names shown in the FIG. 11. For example, the acquisition unit may also be referred to as a communication unit.

If the various units in FIG. 11 are implemented in the form of the software functional module, and sold or used as independent products, they may be stored in a computer-readable storage medium. Based on this understanding, the technical solutions of the present disclosure may be essentially, or a part of the technical solutions of the present disclosure that contributes to the prior arts, or all or a portion of the technical solutions of the present disclosure may be, embodied in the form of a software product, and the computer software product may be stored in a storage medium including couples of instructions, thus to enable a computer device (may be a personal computer, a server, a network device, etc.) or a processor to perform all or a portion of steps of the method in the various embodiments of the present disclosure. The storage medium storing a computer software product includes various types of media capable of storing program codes, such as a USB flash drive, a mobile disk, a read-only memory (ROM), a random-access memory (RAM), a magnetic disk, or an optical disk, etc.

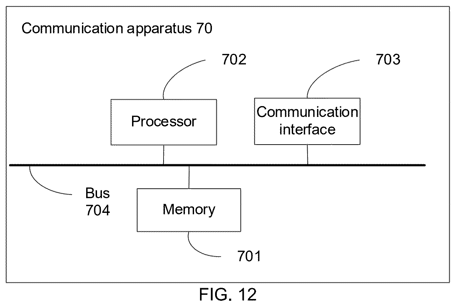

In a case where the above-mentioned communication apparatus 60 implements the functions of the above-mentioned integrated modules by adopting the form of hardware, there is provided a structural schematic diagram of a communication apparatus in the embodiments of the present disclosure. As shown in FIG. 12, the communication apparatus 70 includes: a processor 702, a communication interface 703, and a bus 704. In some embodiments, the communication apparatus 70 further includes a memory 701.

The processor 702 may be various exemplary logical blocks, modules and circuits for implementing or performing what is described in combination with disclosed contents of the present disclosure. The processor 702 may be a central processor, a general-purpose processor, a digital signal processor, an application specific integrated circuit, a field programmable gate array, or other programmable logic components, a transistor logic component, a hardware assembly, or any combination thereof. The processor 702 may implement or perform various illustrative logical blocks, modules and circuits described in conjunction with the disclosed contents of the present disclosure. The processor 702 may also be a combination that implements computing functions, for example, the processor 702 includes a combination of one or more microprocessors, a combination of a DSP (digital signal processor) and a microprocessor, or the like.

The communication interface 703 is configured to connect with other devices through a communication network. The communication network may be the Ethernet, a wireless access network, a wireless local area network (WLAN), or the like.

The memory 701 may be a read-only memory (ROM) or other types of static storage devices that are capable of storing static information and instructions, a random access memory (RAM), or other types of dynamic storage devices that are capable of storing information and instructions, or an electrically erasable programmable read-only memory (EEPROM), a magnetic disk storage medium or any other magnetic storage devices, or any other media that are capable of being used to carry or store desired program codes with a form of instructions or data and can be accessed by a computer, which is not limited thereto.

As a possible implementation, the memory 701 may exist independently from the processor 702, and the memory 701 may be connected to the processor 702 through the bus 704, and is configured to store instructions or program codes. In response to that the processor 702 invokes and executes the instructions or program codes stored in the memory 701, the processor 702 may implement the network optimization method provided in the embodiments of the present disclosure.

In another implementation, the memory 701 may be integrated with the processor 702.

The bus 704 may be an extended industry standard architecture (EISA) bus, or the like. The bus 704 may be classified as an address bus, a data bus, a control bus, or the like. For ease of representation, only one bold line is used in FIG. 12 for representing the bus 704, but it does not mean that there is only one bus or one type of bus.

Through the description of the above implementations, those of ordinary skill in the art may clearly understand that for the convenience and simplicity of the description, the division of the above functional modules is given merely as an example. In practical applications, the above functions may be allocated to different functional modules according to requirements, that is, an internal structure of the base station or terminal may be divided into different functional modules to complete all or part of the functions described above.

A computer-readable storage medium is further provided in the embodiments of the present disclosure. All or part of the processes in the above-mentioned method embodiments may be implemented by relevant hardware instructed by computer instructions. Programs may be stored in the above-mentioned computer-readable storage medium, and upon being executed, the programs may include the processes as described in the above-mentioned method embodiments. The computer-readable storage medium may be an internal storage in any of the aforementioned embodiments. The above-mentioned computer-readable storage medium may also be an external storage device of the above-mentioned communication apparatus, such as a plug-in hard disk, a smart media card (SMC), a secure digital (SD) card, a flash card, etc., equipped on the above-mentioned communication apparatus. Furthermore, the above-mentioned computer-readable storage medium may include both an internal storage unit and an external storage device of the above-mentioned communication apparatus. The above-mentioned computer-readable storage medium is configured to store the above-mentioned computer programs and other programs and data required by the above-mentioned communication apparatus. The above-mentioned computer-readable storage medium may further be configured to temporarily store data that has been output or is to be output. The readable storage medium includes a non-transitory computer-readable storage medium.

A computer program product is further provided in the embodiments of the present disclosure. The computer program product includes a computer program that, upon being run on a computer, enables the computer to perform any one of the network optimization method provided in the above-mentioned embodiments.

Although the present disclosure is described herein in conjunction with various embodiments, other variations of the disclosed embodiments may be understood and implemented by those skilled in the art by viewing the accompanying drawings, the disclosed contents, and the attached claims during the implementation of the present disclosure claimed to be protected. In the claims, "comprise/comprises/comprising" does not exclude other components or steps, and "a/an" or "one" does not exclude a number of a plurality. A single processor or other units may implement couples of functions listed in the claims. Some measures are recorded in different dependent claims, but this does not mean that these measures cannot be combined to produce good results.

Although the present disclosure is described in conjunction with features and embodiments thereof, obviously, various modifications and combinations may be made thereto without departing from the spirit and scope of the present disclosure. Accordingly, the specification and accompanying drawings herein are merely exemplary illustrations of the present disclosure defined by the claims and are deemed to cover any and all modifications, variations, combinations or equivalents within the scope of the present disclosure. Obviously, those skilled in the art can make various modifications and variations to the present disclosure without departing from the spirit and scope of the present disclosure. In this way, if these modifications and variations of the present disclosure fall within the scope of the claims of the present disclosure and their equivalent technologies, the present disclosure is also intended to include these modifications and variations.

The foregoing descriptions are merely specific implementations of the present disclosure, but the protection scope of the present disclosure is not limited thereto. Any variations or replacements within the technical scope disclosed in the present disclosure shall fall within the protection scope of the present disclosure. Therefore, the protection scope of the present disclosure shall be subject to the protection scope of the claims.

## Claims

1. A network optimization method, **characterized by** comprising:
in response to that a target cell is in a congested state, acquiring a quality of service class of a first user in a user list of the target cell;
judging whether the quality of service class of the first user in the user list of the target cell is lower than or equal to a preset class threshold; and
in response to that the quality of service class of the first user is lower than or equal to the preset class threshold, lowering the quality of service class of the first user.

2. The method according to claim 1, further comprising:
in response to detecting that a second user switches to the target cell, acquiring a quality of service class of the second user, and judging whether the quality of service class of the second user is lower than or equal to the preset class threshold; and
in response to that the quality of service class of the second user is lower than or equal to the preset class threshold, lowering the quality of service class of the second user.

3. The method according to claim 1, further comprising:
receiving a bearer establishment request of a third user, wherein the third user is a user located within a network coverage range of the target cell;
judging whether the user list of the target cell includes the third user according to the bearer establishment request of the third user;
in response to determining that the user list of the target cell does not include the third user, acquiring a quality of service class of the third user, and judging whether the quality of service class of the third user is lower than or equal to the preset class threshold;
in response to that the quality of service class of the third user is lower than or equal to the preset class threshold, lowering the quality of service class of the third user.

4. The method according to any one of claims 1 to 3, further comprising:
in response to that a target user switches out from the target cell, restoring a quality of service class of the target user to a quality of service class of the target user before being lowered, and deleting the target user from the user list of the target cell, wherein the target user is a user whose quality of service class is lowered in response to that the target cell is in the congested state.

5. The method according to any one of claims 1 to 3, further comprising:
after the target cell is switched from the congested state to a non-congested state, restoring a quality of service class of a target user to a quality of service class of the target user before being lowered, wherein the target user is a user whose quality of service class is lowered in response to that the target cell is in the congested state.

6. The method according to claim 1, wherein lowering the quality of service class of the first user comprises at least one of:
lowering a quality of service class identifier of the first user; or
lowering an allocation and retention priority of the first user is lowered.

7. The method according to claim 1, wherein lowering the quality of service class of the first user comprises:
adjusting a current first quality of service class of the first user to a preset second quality of service class of the first user, wherein the second quality of service class is lower than the first quality of service class.

8. The method according to claim 1, wherein the target cell being in the congested state meets at least one of:
an average utilization rate of an uplink physical resource block (PRB) of the target cell being greater than a preset utilization rate; or
an average utilization rate of a downlink PRB of the target cell being greater than the preset utilization rate.

9. A communication apparatus, **characterized by** comprising: a processor and a memory; wherein
the memory stores instructions executable for the processor;
wherein in response to that the processor is configured to, upon executing the instructions, enable the communication apparatus to perform the method according to any one of claims 1 to 8.

10. A computer-readable storage medium, **characterized in that** the computer-readable storage medium comprises computer instructions that, upon being run on a computer, enable the computer to execute the method according to any one of claims 1 to 8.
